# EUROPÄISCHE PATENTSCHRIFT

(11) **EP 2 167 850 B1**
(45) Veröffentlichungstag und Bekanntmachung des Hinweises auf die Patenterteilung: **12.12.2012**
(21) Anmeldenummer: 08773374.7
(22) Anmeldetag: 09.06.2008
(51) Int. Cl.: F16K 1/44

(54) **SITZREINIGUNGSFÄHIGES DOPPELSITZVENTIL**
DOUBLE-SEAT VALVE, THE SEATS OF WHICH CAN BE CLEANED
SOUPAPE À DOUBLE SIÈGE, APTE AU NETTOYAGE DU SIÈGE

(30) Priorität: 16.06.2007 DE 102007027765
(43) Veröffentlichungstag der Anmeldung: 31.03.2010
(73) Patentinhaber: GEA Tuchenhagen GmbH, 21514 Büchen (DE)
(72) Erfinder: BURMESTER, Jens, 23883 Grambek (DE); SUEDEL, Matthias, 23626 Ratekau (DE)
(74) Vertreter: Eisenführ, Speiser & Partner
(86) Internationale Anmeldenummer: PCT/EP2008/004592
(87) Internationale Veröffentlichungsnummer: WO 2008/155043

(56) Entgegenhaltungen:
- EP-A- 0 174 384
- WO-A-2007/054134
- DE-A1- 19 722 615

## Beschreibung

### TECHNISCHES GEBIET

Die Erfindung betrifft ein sitzreinigungsfähiges Doppelsitzventil mit zwei seriell angeordneten, relativ zueinander bewegbaren Schließgliedern nach dem Oberbegriff des Anspruchs 1.

### STAND DER TECHNIK

Aus der EP 0 039 319 B1 ist ein Doppelsitzventil bekannt, das hinsichtlich seiner Schließgliedkonfiguration wesentliche Merkmale des Doppelsitzventils der einleitend gekennzeichneten Gattung aufweist. Das zweite Schließglied ist bei diesem Doppelsitzventil als Sitzteller ausgebildet, dessen Dichtung rein axial auf die zugeordnete Sitzfläche wirkt (Dichtung mit Druckeingriff). Das Doppetsitzventil ist allerdings nicht sitzreinigungsfähig, sodass diesem Stand der Technik keinerlei Hinweise zur strömungstechnischen Behandlung der bei der Sitzreinigung generierten Sitzreinigungsströmungen zu entnehmen sind. Unter Sitzreinigung versteht man hinlänglich das spaltweite Freilegen der beiden Sitzflächen eines Doppelsitzventils, getrennt und unabhängig voneinander, durch einen Teilhub des jeweiligen Schließgliedes, wodurch Reinigungsflüssigkeit aus dem dem Schließglied zugeordneten Ventilgehäuseteil auf dem Weg über die freigelegte Sitzfläche in den Leckagehohlraum strömt.

Ein sitzreinigungsfähiges Doppelsitzventil, das durch spaltweites Öffnen seiner Sitzflächen eine Reinigung der jeweils freigelegten Sitzfläche gestattet, ist aus der DE 38 35 944 C2 bekannt. Bei jeder der drei Dichtungen bei diesem bekannten Doppelsitzventil handelt es sich um eine diskrete Dichtung, wobei jeder Dichtung nur eine einzige Funktion zukommt. Die erste Dichtung im ersten Schließglied ist eine rein radial wirkende Dichtung, die in der als zylindrische Mantelfläche ausgebildeten ersten Sitzfläche gleitet und dort infolge der vorgesehenen Vorspannung abdichtet (Dichtung mit Gleiteingriff). Die zweite Dichtung im zweiten Schließglied wirkt auf die kegelförmig ausgebildete zweite Sitzfläche, so dass hier von einer axial/radial wirkenden Dichtung gesprochen werden kann (Dichtung mit Gleit-/Druckeingriff). Die dritte Dichtung, die sog. Mitteldichtung, entfaltet dann ihre Wirkung, wenn das erste Schließglied beim Öffnungshub am zweiten Schließglied über diese Mitteldichtung zur Anlage kommt und im Zuge der weiteren Offnungsbewegung das zweite Schließglied in die volle Offenstellung mitnimmt (Dichtung im Druckeingriff). Dabei ist die Mitteldichtung in einer dem Leckagehohlraum zugewandten Stirnfläche am zweiten, abhängig angetriebenen Schließglied angeordnet.

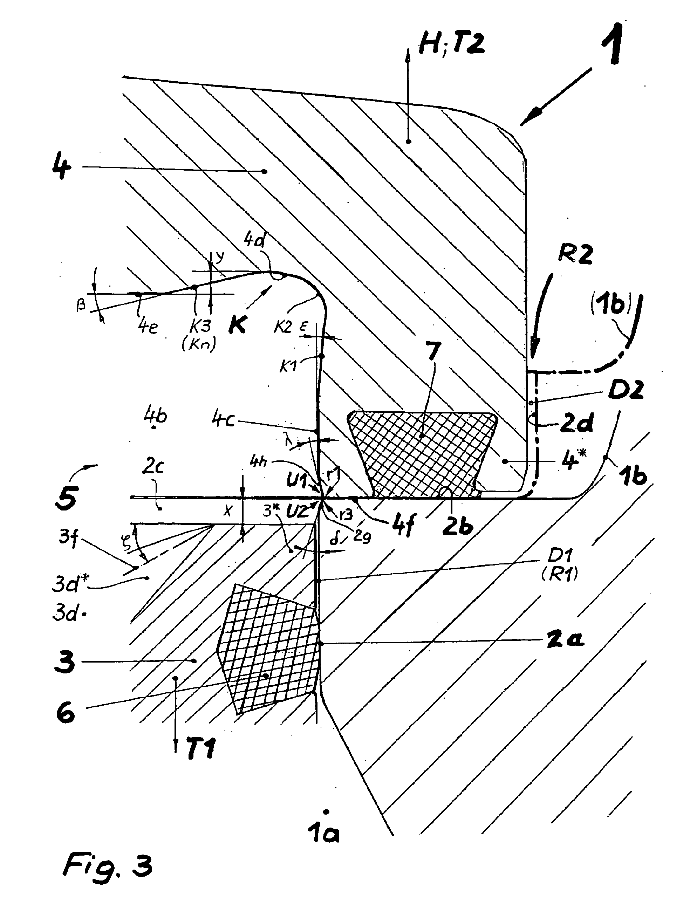

Das sitzreinigungsfähige Doppelsitzventil gemäß DE 38 35 944 C2 verfügt über zwei sog. Sitzreinigungsstellungen, wobei die erste Sitzreinigungsstellung durch den dem Öffnungshub entgegengerichteten ersten Teilhub des ersten Schließgliedes erzeugt wird. Bei der Sitzreinigungsstellung des ersten Schließgliedes (bezogen auf die Zeichnungslage gemäß Figur 3 ist dies das untere Schließglied) wird gleichzeitig auch eine Durchführung eines als Druckausgleichkolben ausgebildeten, mit dem ersten Schließglied verbundenen Ablaufrohres durch das untere Ventilgehäuse zwecks Reinigung der zugeordneten Dichtung freigelegt. Die Sitzreinigungsstellung des zweiten (oberen) Schließgliedes ist in der DE 38 35 944 C2 nicht weiter thematisiert; sie erfolgt durch den dem Öffnungshub gleichgerichteten zweiten Teilhub. Die Limitierung der jeweiligen Reinigungsmittelmenge bei der Sitzreinigung erfolgt durch eine mehr oder weniger aufwendige und oftmals nicht hinreichende Justierung des freigelegten Spaltes zwischen jeweiliger Dichtung und der zugeordneten Sitzfläche.

Beim Doppelsitzventil gemäß EP 0 039 319 B1 hat die Dichtung im ersten Schließglied eine Doppelfunktion; sie fungiert zum einen als Sitzdichtung und übernimmt zum anderen im Zuge der Öffnungsbewegung und in der vollen Offenstellung des Doppelsitzventils zusätzlich auch die Funktion der Mitteldichtung beim Doppelsitzventil gemäß DE 38 35 944 C2**.**

Ein Doppelsitzventil, das sich bei der Sitzreinigung allein auf das Freilegen der Sitzfläche im Bereich des jeweils zugeordneten Schließgliedes beschränkt und das darüber hinaus eine großzügig dimensionierte Verbindung des Leckagehohlraumes mit der Umgebung des Doppelsitzventils verwirklicht, wobei der Durchtrittsquerschnitt der Verbindung annähernd dem Durchtrittsquerschnitt der an das Doppelsitzventil angeschlossenen größten Rohrnennweite entspricht, ist in der Firmendruckschrift **"Betriebsanleitung BAA D620-PMO.32, Doppelsitzventil Typ D 620 PMO"** der Südmo Components GmbH, D-73469 Riesbürg, beschrieben. Dieses Doppelsitzventil ist durch seine großzügige Bemessung der Verbindungsleitung zwischen Leckagehohlraum und Umgebung grundsätzlich geeignet, bei größeren Dichtungsdefekten einen Druckaufbau im Leckagehohlraum zu verhindern.

Zur Limitierung der Reinigungsmittelmenge bei der Sitzreinigung ist es bekannt, beispielsweise leckageraumseitig angeordnete Drosselspalte vorzusehen, die mit der jeweils freigelegten Sitzfläche in Reihe geschaltet sind. Ein diesbezügliches Doppelsitzventil ist in der DE 196 08 792 A1 beschrieben. Bei diesem Doppelsitzventil wird die erste Sitzreinigungsstellung durch den dem Öffnungshub entgegengerichteten ersten Teilhub erzeugt. Dabei bildet ein leckageraumseitig am ersten Schließglied angeordneter zylindrischer Ansatz mit der zugeordneten zylindrischen ersten Sitzfläche den ersten Drosselspalt, über den die aus dem benachbarten ersten Ventilgehäuseteil herangeführte Reinigungsmittelmenge begrenzt werden kann. Die Sitzreinigungsstellung des zweiten Schließgliedes erfolgt durch den dem Öffnungshub gleichgerichteten zweiten Teilhub, wobei in der Teiloffenstellung ein leckageraumseitig am zweiten Schließglied angeordneter zylindrischer Ansatz mit dem zugeordneten Teil der Verbindungsöffnung einen zweiten Drosselspalt bildet, der die in dieser Sitzreinigungsstellung erzeugte zweite Sitzreinigungsströmung mengenmäßig limitiert. Da die beiden Schließglieder und die zugeordneten zylindrischen Ansätze unterschiedliche Durchmesser aufweisen, sind die jeweils zugeordneten Abschnitte der Verbindungsöffnung zwischen den beiden Ventilgehäuseteilen ebenfalls im Durchmesser unterschiedlich, so dass zwischen diesen beiden Durchmessern eine Übergangsfläche zustande kommt.

Diese Übergangsfläche, die mit dem durchmessergrößeren Abschnitt einen stumpfen, vorzugsweise einen senkrechten Umlenkwinkel bildet, bewirkt, dass in der Sitzreinigungsstellung des ersten Schließgliedes die erste Sitzreinigungsströmung nicht unmittelbar auf den zweiten Drosselspalt und damit auf den Sitzbereich des zweiten Schließgliedes auftrifft. In gleicher Weise wird verhindert, dass bei der Sitzreinigungsstellung des zweiten Schließgliedes die zweite Sitzreinigungsströmung den ersten Drosselspalt und damit den Sitzbereich unmittelbar beaufschlagt.

Bei der Sitz- und Schließgliedkonfiguration des Doppelsitzventils gemäß EP 0 039 319 B1 steht eine derartige Übergangsfläche und deren Wirkmechanismus grundsätzlich nicht zur Verfügung, so dass die heute bereits vielfach gestellte Forderung nach einer Vermeidung einer Direktbeaufschlagung der Sitzbereiche im Zuge der Sitzreinigung von diesem bekannten Doppelsitzventil nicht zu erfüllen ist.

Die Forderungen, die an ein sitzreinigungsfähiges Doppelsitzventil in bestimmten Ländern gestellt werden, gehen über die vorg. Limitierung der Reinigungsmittelmenge und die Vermeidung einer Direktbeaufschlagung der Sitzbereiche hinaus und sind weitergehend. So wird beispielsweise in den USA gefordert, dass bei größeren Dichtungsdefekten oder gar dem Verlust einer der beiden Sitzdichtungen des in der Schließstellung befindlichen Schließgliedes im Zuge der Sitzreinigung des anderen Schließgliedes über den jeweiligen Dichtungsdefekt bzw. den Sitzbereich ohne Sitzdichtung kein Reinigungsmittel hindurchtreten darf. Unter diesen Bedingungen stellt sich an ein derartiges Doppelsitzventil nicht nur die Forderung nach einer Begrenzung der Reinigungsmittelmenge und Vermeidung einer Direktbeaufschlagung der Sitzbereiche im Zuge der Sitzreinigung, sondern auch nach einer möglichst verwirbelungsfreien Abfuhr der Sitzreinigungsströmung zunächst in den Leckagehohlraum und von dort in die Umgebung, ohne dass der jeweils geschlossene Sitzbereich von dieser Sitzreinigungsströmung und/oder seinen Sekundärströmungen direkt angeströmt oder druckerhöhend beaufschlagt wird.

Unter Direktbeaufschlagung wird jede auf die den Sitzbereich begrenzenden Wandungen senkrecht gerichtete Geschwindigkeitskomponente aus der jeweiligen Sitzreinigungsströmung verstanden. Es hat sich nämlich gezeigt, dass jede diesbezügliche Direktbeaufschlagung zu einer Umwandlung kinetischer Strömungsenergie in statischen Druck führt. Abhängig von dem Auftreffwinkel der Strömung auf die angeströmte Wand- oder Körperfläche ergibt sich eine Verzweigungsströmung mit einer sog. "Verzweigungsstromlinie", wobei letztere die Strömung in zwei Hälften teilt. Die Verzweigungsstromlinie selbst läuft auf den sog. "Staupunkt" auf, so dass an dieser Stelle die Geschwindigkeit gleich Null ist. Der Druckzuwachs in Folge dieses Abstoppens der Geschwindigkeit erhält auch die Bezeichnung "Staudruck". Die vorstehend dargestellten druckerhöhenden Mechanismen generieren, falls sie wirksam werden, eine Leckageströrnung über den jeweiligen Drosselspalt und die defekte oder die gänzlich nicht mehr vorhandene Sitzdichtung.

Ein direktes Auftreffen der Sitzreinigungsströmung auf die den Leckagehohlraum begrenzenden Flächen ist daher in jedem Falle kontraproduktiv. Mit Ausnahme des Doppelsitzventils gemäß DE 196 08 792 A1 kann bei den übrigen vorstehend beschriebenen, bekannten Doppelsitzventilen die erste Sitzreinigungsströmung, die durch Anlüften des ersten Schließgliedes um den ersten Teilhub generiert wird, auf die stirnseitige Begrenzungsfläche des zweiten Schließgliedes, die die Mitteldichtung (DE 38 35 944 C2; Doppelsitzventil Typ D 620 PMO) oder die zylindrische Ausnehmung (EP 0 039 319 B1) aufnimmt, mehr oder weniger lotrecht auftreffen. An der Auftreffstelle wird diese Strömung überwiegend zum Zentrum des Leckagehohlraumes umgelenkt. Weiterhin ergibt sich an der Auftreffstelle eine Verzweigungsstromlinie, deren dem Sitzbereich zugewandter Abzweig dort einen Wirbel und einen Staudruck generieren kann. Die zweite Sitzreinigungsströmung, die durch Anlüften des zweiten Schließgliedes um den zweiten Teilhub generiert wird, trifft mehr oder weniger direkt auf die stirnseitige Begrenzungsfläche des ersten Schließgliedes auf, und auch hier kann ein Teil der zwischen Verzweigungsstromlinie und Sitzbereich befindlichen Strömung letzterem staudruckbildend zugeführt werden.

In der WO 2007/054 131 A1 und der WO 2007/054 134 A1, wobei aus letzterer ein sitzreinigungsfähiges Doppelsitzventil der einleitend gekennzeichneten Gattung bekannt ist, werden bereits Maßnahmen vorgeschlagen, die eine möglichst verwirbelungsfreie Ableitung der Sitzreinigungsströmung in den und aus dem Leckagehohlraum sicherstellen und eine druckerhöhende Direktbeaufschlagung der Sitzbereiche vermeiden. Diese Maßnahmen beziehen sich allerdings auf ein Doppelsitzventil mit den vorstehend kurz umrissenen Merkmalen der DE 196 08 792 A1. Beim Doppelsitzventil gemäß WO 2007/054 134 A1 ist am zweiten Schließglied, dem, bezogen auf eine senkrechte Anordnungslage, oberen Schließglied, ebenfalls leckageraumseitig ein zylindrischer Ansatz angeordnet, der mit der zugeordneten Verbindungsöffnung einen ringförmigen Drosselspalt bildet. Letzterer begrenzt die Sitzreinigungsströmung, wenn sich das zweite Schließglied in seiner Sitzreinigungsstellung befindet.

Es ist Aufgabe der vorliegenden Erfindung, ein Doppelsitzventil der einleitend gekennzeichneten Gattung derart weiterzuentwickeln, dass eine Begrenzung der Sitzreinigungsströmung und eine möglichst verwirbelungsfreie Ableitung der Sitzreinigungsströmung in den und aus dem Leckagehohlraum sichergestellt ist und eine druckerhöhende Direktbeaufschlagung der Sitzbereiche sicher vermieden wird.

### ZUSAMMENFASSUNG DER ERFINDUNG

Die Aufgabe wird durch ein Doppelsitzventil mit den Merkmalen des Anspruchs 1 gelöst. Vorteilhafte Ausgestaltungen des sitzreinigungsfähigen Doppelsitzventils gemäß der Erfindung sind in den Unteransprüchen beschrieben.

Bei dem erfindungsgemäßen Doppelsitzventil wird in an sich bekannter Weise die bei der jeweiligen Sitzreinigung aus dem zugeordneten Spalt zwischen Sitzdichtung und Sitzfläche austretende Sitzreinigungsströmung möglichst verwirbelungs- und hindernisfrei in den Leckagehohlraum eingeleitet und von dort in gleicher Weise in die Umgebung abgeführt. Dies gelingt zum einen durch eine die Sitzreinigungsströmungen im Leckagehohlraum führende und lenkende Strömungskontur. Diese Strömungskontur sorgt bei der Sitzreinigung des unten liegenden, ersten Schließgliedes dafür, dass die erste Sitzreinigungsströmung dem Wandverlauf im Bereich der ersten Sitzfläche ablösungsfrei folgt. Anschließend erfolgt in der mit der zylindrischen ersten Sitzfläche fluchtenden zylindrischen Ausnehmung des zweiten Schließgliedes eine stoßfreie Umlenkung dieser ersten Sitzreinigungsströmung, so dass letztere in eine zentrisch im ersten Schließglied angeordnete Ablaufbohrung gelangen kann, ohne mit den den Leckagehohlraum berandenden Bereichen staudruckbildend zu kollidieren. Dies wird dadurch erreicht, dass die Umfangswand der zylindrischen Ausnehmung an ihrem dem ersten Schließglied abgewandten Ende in eine rotationssymmetrische Umlenkfläche übergeht und diese Umlenkfläche in einer im Wesentlichen senkrecht zur Längsachse des zweiten Schließgliedes orientierten Stirnfläche der Ausnehmung ausmündet.

Wesentlich ist die stoßfreie Umlenkung der Sitzreinigungsströmung in der Umlenkfläche. Dies gelingt dadurch, dass, im Meridianschnitt gesehen, die Umlenkfläche eine Kontur mit knickfreiem Verlauf aufweist, wobei ein Richtungsvektor im Ausmündungspunkt der Umlenkfläche unter den vorg. Bedingungen in die zentrische im ersten Schließglied angeordnete Ablaufbohrung weist.

Bei der Strömungsführung der durch Anlüften des zweiten Schließgliedes generierten zweiten Sitzreinigungsströmung ist wesentlich, dass diese an einer durch die zweite Sitzfläche und einen ersten Endabschnitt der ersten Sitzfläche gebildete ersten Umlaufkante definiert ablöst und an den das erste Schließglied im Bereich des Leckagehohlraumes berandenden Flächen sicher tangential vorbeigeführt wird. Zu diesem Zweck ist zwischen der ersten Umlaufkante und den in Frage kommenden Bereichen des ersten Schließgliedes ein Sicherheitsabstand vorgesehen, der unter allen möglichen fertigungstechnischen Gegebenheiten ein diesbezügliches Auftreffen verhindert.

Dieser Sicherheitsabstand des ersten Schließgliedes vom Richtungsvektor an der Austrittsstelle der zweiten Sitzfläche in den ersten Endabschnitt der ersten Sitzfläche wird zweckmäßig derart bemessen, dass dieser wenigstens so groß wie die Summe aller Fertigungstoleranzen der Bauteile des Doppelsitzventils ist, die in der Schließstellung des ersten Schließgliedes dessen geringsten axialen Abstand zur zweiten Sitzfläche bestimmen.

Zur Lösung der der Erfindung zugrunde liegenden Aufgabe besteht der erfinderischer Grundgedanke darin, die Endlagenbegrenzung, den wünschenswerten, jedoch nicht in allen Fällen realisierten oder realisierbaren festen Anschlag des zweiten Schließgliedes (Sitzteller mit axial wirkender Dichtung im Druckeingriff oder Sitzteller mit radial/axial wirkender Dichtung im Gleit-/Druckeingriff) in dessen Schließstellung an das Ende der zweiten Sitzfläche zu verlagern, und zwar unmittelbar an die erste Sitzfläche angrenzend. Dies gelingt erfindungsgemäß dadurch, dass die Anschlagfläche an einer der zweiten Dichtung radial innenseits benachbarten Begrenzungsfläche des zweiten Schließgliedes angeordnet ist und in der Schließstellung des zweiten Schließgliedes an der zweiten Sitzfläche anliegt. Dabei bildet die Anschlagfläche mit der Umfangswand eine zweite Umlaufkante aus.

Durch diese Maßnahme wird der bislang vorhandene, an den Leckagehohlraum angrenzende Spalt zwischen dem zweiten Schließglied und dem Ventilgehäuse beseitigt, wobei es sich in der Regel um einen metallischen Verschluss handelt. Über den metallisch geschlossenen Spalt zwischen dem zweiten Schließglied und der zweiten Sitzfläche kann nunmehr im Zuge der Sitzreinigung des ersten Schließgliedes kein Reinigungsmittel an die ggf. defekte oder ggf. gänzlich nicht mehr vorhandene zweite Sitzdichtung gelangen.

Ein derartiges definiertes Schließen dieses kritischen Spaltes ist bislang bei bekannten Doppelsitzventilen der eingangs beschriebenen Art, ausgenommen das gattungsbildende Doppelsitzventil, nicht vorgesehen. Wesentlich bei der Realisierung des erfinderischen Grundgedankens ist, dass sich die jeweilige Anschlagfläche am zweiten Schließglied und am Ventilgehäuse unmittelbar, vollständig umlaufend und, soweit dies bei festem bzw. metallischem Kontakt möglich ist, dicht und unmittelbar am Leckagehohlraum berühren. Die Freiheitsgrade bei der Ausgestaltung des zweiten Schließgliedes hinsichtlich möglicher Wirkmechanismen der Sitzdichtung werden durch die vorg. Anschlagfläche nicht begrenzt. Prinzipiell können in diesem Bereich rein axial oder radial/axial wirkende zweite Dichtungen vorgesehen werden.

Die vorgeschlagene erfinderische Lösung beinhaltet zum Anderen, dass das zweite Schließglied, bezogen auf seine zweite Dichtung, radial außenseits eine zylindrische Umfangskontur aufweist, und dass die Umfangskontur mit einer ringförmigen zylindrischen Ausnehmung in der Verbindungsöffnung auf der Seite des zweiten Schließgliedes einen ringförmigen zweiten Drosselspalt bildet. Durch diesen an sich bekannten Drosselspalt wird die Reinigungsmittelmenge bei der Sitzreinigung des zweiten Schließgliedes begrenzt.

Die Reinigungsmittelmenge bei der Sitzreinigung des ersten Schließgliedes wird ebenfalls begrenzt, wenn, gemäß einer weiteren Ausführungsform, am ersten Schließglied leckageraumseitig vorgesehene Endabschnitt in Form eines zylindrischen Ansatzes ausgebildet ist, der mit der ersten Sitzfläche einen ringförmigen ersten Drosselspalt bildet.

Es hat sich weiterhin als günstig mit Blick auf eine Vermeidung jeglicher Staudruckbildung herausgestellt, wenn die von der zweiten Sitzfläche und dem Endabschnitt der ersten Sitzfläche gebildete erste Umlaufkante mit einer kleinstmöglichen zweiten Eckenabrundung abgerundet ist. Im Idealfall wäre hier eine scharfkantige Ausführung vorzusehen, die jedoch aus festigungstechnischen und praktischen Gründen (Gefährdung der ersten Dichtung) nicht zweckmäßig ist.

Zur Erzielung eines glatten Überganges der radialen ersten Dichtung von der zylindrischen ersten Sitzfläche in die zylindrische Umfangswand der Ausnehmung im zweiten Schließglied wird weiterhin vorgeschlagen, dass die zylindrische Umfangswand in eine zweite Einfahrschräge ausmündet und letztere mit der Anschlagfläche die zweite Umlaufkante ausbildet.

Um Staudruckbildung bei dem Eintritt der ersten Sitzreinigungsströmung in die Umlenkfläche im zweiten Schließglied zu vermeiden, sieht ein weiterer Vorschlag vor, dass die von der Anschlagfläche und der Umfangswand bzw. der zweiten Einfahrschräge gebildete zweite Umlaufkante mit einer kleinstmöglichen ersten Eckenabrundung abgerundet ist. Ein scharfkantiger Übergang in diesem Bereich ist auch hier aus fertigungstechnischen und praktischen Gründen nicht zweckmäßig, ein relativ großer Abrundungsradius ist kontraproduktiv und führt zur unerwünschten Staudruckbildung.

Um zu vermeiden, dass die erste Sitzreinigungsströmung nach Verlassen der Umlenkfläche die Stirnfläche der Ausnehmung staudruckbildend anströmt, ist weiterhin vorgesehen, dass die Umlenkfläche die Stirnfläche um einen axialen Hinterschneidungsabstand hinterschneidet. Dadurch kann die Kontur der Umlenkfläche im Bereich ihres Ausmündungspunktes derart um einen zweiten Umlenkwinkel gegenüber der Stirnfläche der zylindrischen Ausnehmung angestellt werden, dass die erste Sitzreinigungsströmung leicht in Richtung zum zweiten Schließglied hin abgelenkt wird und dann dem Wandverlauf der angrenzenden Stirnfläche der zylindrischen Ausnehmung zum Zwecke der Reinigung derselben folgen kann. Es hat sich als zweckmäßig herausgestellt, wenn der zweite Umlenkwinkel im Bereich von 5 bis 20 Grad, bevorzugt mit 15 Grad ausgeführt ist.

Ein in gleicher Weise befriedigendes Strömungsergebnis wird gemäß einem weiteren Vorschlag dadurch erreicht, dass sich die Kontur aus einer Abfolge gekrümmter Abschnitte zusammensetzt, die an ihren jeweiligen Übergangsstellen jeweils eine gemeinsame Tangente besitzen. Eine andere Ausführungsform sieht vor, dass die Kontur aus einem einzigen Abschnitt kontinuierlich veränderter Krümmungen besteht. Schließlich wird auch vorgeschlagen, dass die Kontur aus einem einzigen Abschnitt mit konstanter Krümmung gebildet ist.

Um unter allen Druck- und Geschwindigkeitsbedingungen eine einwandfreie und störungsfreie Ableitung des Reinigungsmittels sicherzustellen, ist vorgesehen, dass die Ablaufbohrung über mehrere über den Umfang verteilte Verbindungsbohrungen den Leckagehohlraum mit der Umgebung des Doppelsitzventils verbindet, und dass die dem Leckagehohlraum zugewandte stirnseitige Begrenzung des ersten Schließgliedes eine allseits umfängliche, zur Ablaufbohrung hin abfallende Anschrägung aufweist.

Um Wirbel- und Staudruckbildung nicht nur im Bereich der vorstehend beschriebenen Sitzflächen des Doppelsitzventils zu vermeiden, ist es von Vorteil, wenn auf jegliche Einbauten und Hindernisse im Übrigen Leckagehohlraum, soweit dies konstruktiv möglich ist, verzichtet wird. Diesbezüglich sieht daher ein weiterer Vorschlag vor, dass die Ablaufbohrung den Leckagehohlraum mit der Umgebung des Doppelsitzventils verbindet, und dass die dem Leckagehohlraum zugewandte stirnseitige Begrenzung des ersten Schließgliedes eine allseits umfänglich zur Ablaufbohrung hin abfallende Anschrägung aufweist. Bei dieser Ausführung durchdringt eine mit dem ersten Schließglied verbundene erste Verstellstange eine mit dem zweiten Schließglied verbundene, als Hohlstange ausgeführte zweite Verstellstange konzentrisch, setzt sich fliegend durch die Ablaufbohrung hindurch fort und ist an einem dem zweiten Schließglied abgewandten Ende des ersten Schließgliedes mit letzterem über wenigstens eine im Wesentlichen radial orientierte Traverse fest verbunden. Dadurch werden die ansonsten im Bereich des Leckagehohlraums üblichen Streben und anderen Verbindungsmittel vermieden und an ein relativ weit vom Leckagehohlraum entferntes Ende, wo sie keine störenden Einflüsse auf die Strömungsführung mehr haben können, verlagert.

Die vorgenannte Anschrägung der dem Leckagehohlraum zugewandten Stirnfläche des ersten Schließgliedes ist zweckmäßig als Kegelmantelfläche ausgeführt, die gegenüber der Grundfläche des Kegels im Bereich von 10 bis 20 Grad, bevorzugt 15 Grad geneigt ist.

In diesem Zusammenhang wird weiterhin vorgeschlagen, dass drei über den Umfang gleichmäßig verteilt angeordnete Traversen fest an einem Verstellstangenabschnitt vorgesehen sind, die jeweils radial außenseits fest mit einem umlaufenden Ring verbunden sind, und dass der Verstellstangenabschnitt, die Traversen und der Ring einen einstückigen Anschweißteil bilden.

Dabei ist es weiterhin vorteilhaft, wenn sich der Anschweißteil außenseits über den Ring an einen einen leckagehohlraumfernen Abschnitt der Ablaufbohrung begrenzenden Druckausgleichskolben und innenseits über den Verstellstangenabschnitt an die erste Verstellstange anschließt und wenn der Ring in seinem Innendurchmesser derart gegenüber dem Durchmesser der Ablaufbohrung unter Zwischenschaltung eines konisch sich erweiternden Übergangsbereichs vergrößert ist, dass der Innendurchgang der Ablaufbohrung durch die Traversen nicht geschmälert ist.

Eine die zweite Sitzfläche betreffende zweite Ausführungsform sieht vor, dass die zweite Sitzfläche kegelförmig ausgeführt und gegenüber der zylindrischen Ausnehmung um einen Sitzwinkel geneigt ist, und dass die zweite Dichtung axial/radial gegenüber der zweiten Sitzfläche im Gleit-/Druckeingriff abdichtet, wobei die Anschlagfläche an der zweiten Sitzfläche erfindungsgemäß anliegt. Der Sitzwinkel wird hierbei im Bereich zwischen 25 und 35 Grad, bevorzugt mit 30 Grad ausgeführt.

Gemäß einer weiteren Ausgestaltung wird vorgeschlagen, dass die zweite Sitzfläche senkrecht zur Längsachse des Doppelsitzventils angeordnet ist, und dass die zweite Dichtung axial gegenüber der zweiten Sitzfläche im Druckeingriff abdichtet, wobei auch hier die Anschlagfläche an der zweiten Sitzfläche erfindungsgemäß anliegt.

Derartige Lösungen mit den Vorteilen einer axial/radial oder einer rein axial wirkenden Dichtung und eines entsprechend wechselwirkenden Sitztellers sind dann möglich, wenn die zweite Dichtung zum einen derart duktil beschaffen ist und zum anderen auch eine volumenkonstante Formveränderung im Rahmen ihrer Einbettung derart erfahren kann, dass die erfindungsgemäß vorgesehene feste Anlage des zweiten Schließgliedes mit seiner Anschlagfläche an der zweiten Sitzfläche unter allen Bedingungen sichergestellt ist, wobei die feste Anlage im Regelfall eine metallische ist.

### KURZBESCHREIBUNG DER ZEICHNUNGEN

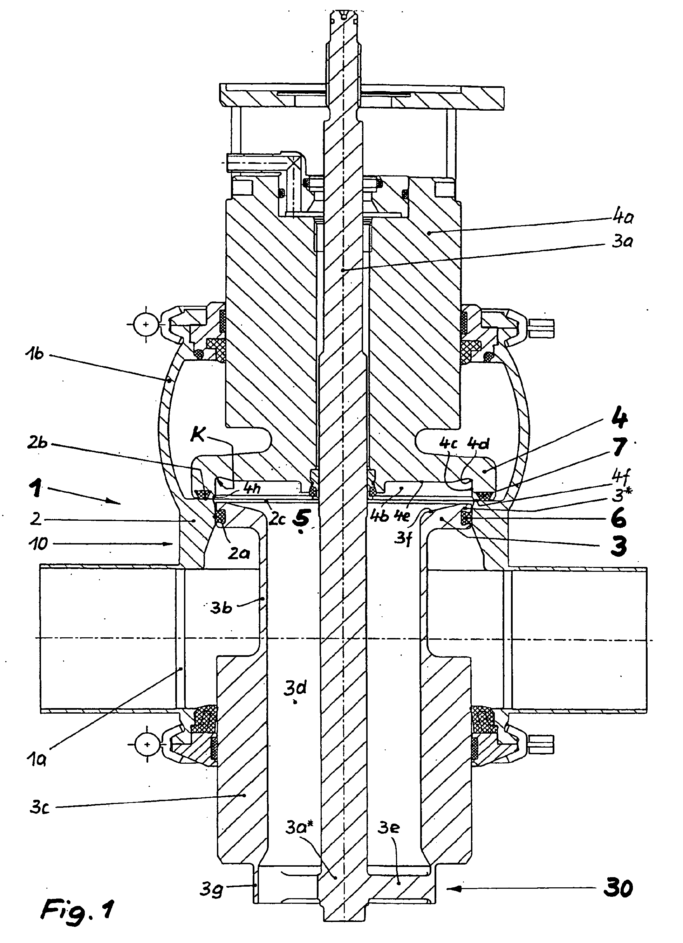

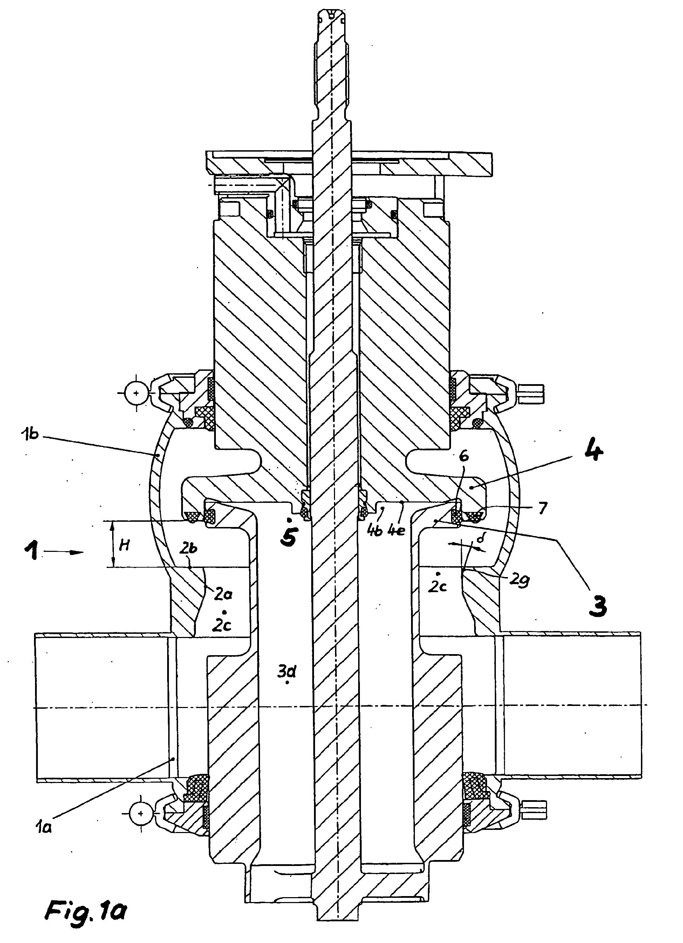

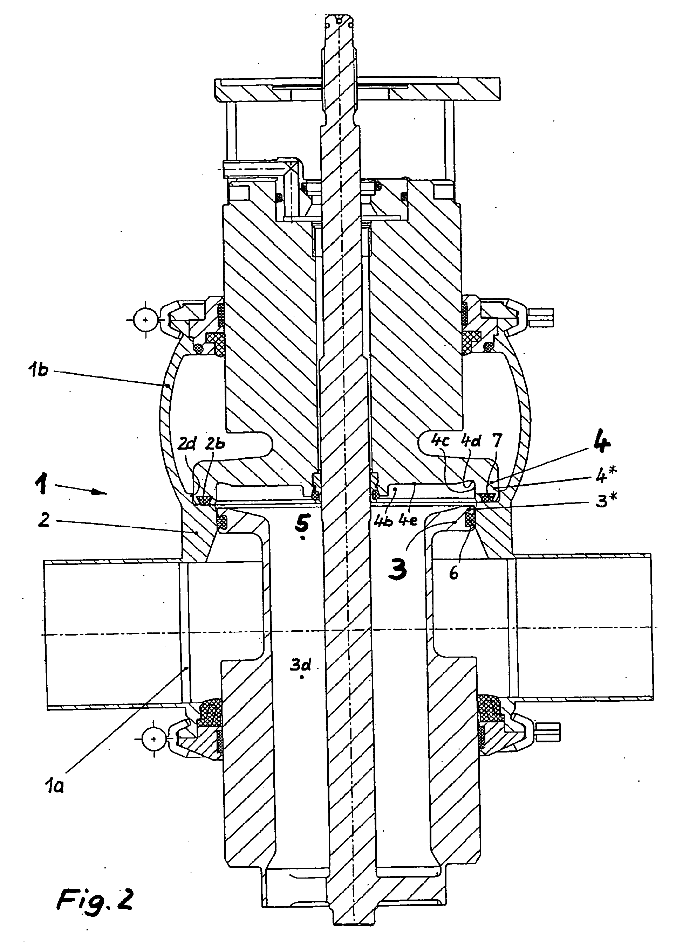

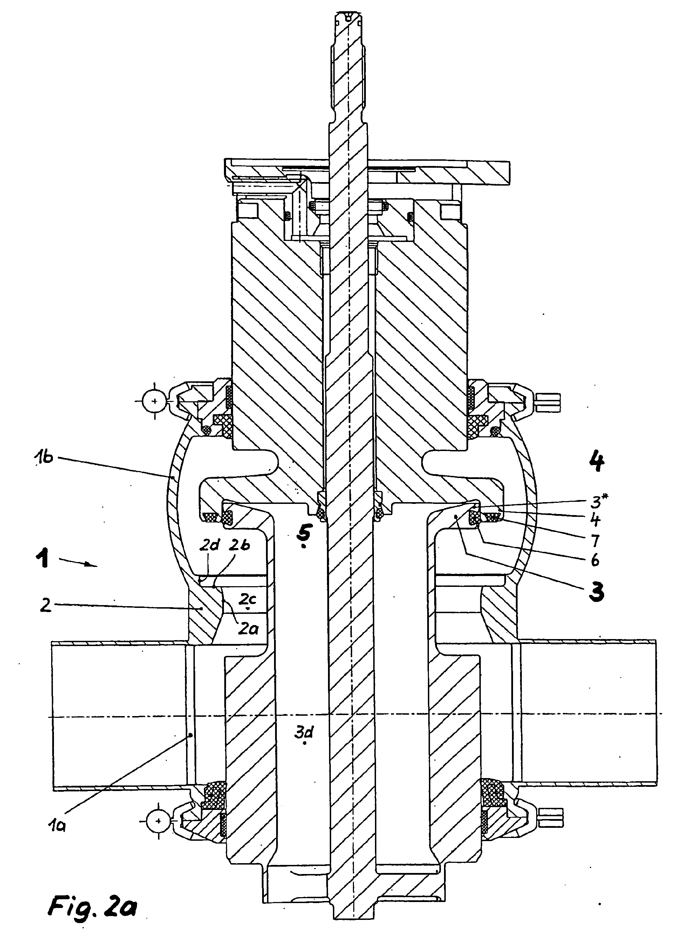

Ein Ausführungsbeispiel des vorgeschlagenen sitzreinigungsfähigen Doppelsitzventils gemäß der Erfindung ist in den Figuren 2 bis 5b der Zeichnung dargestellt und wird nachfolgend nach Aufbau und Funktion beschrieben. Die Figuren 1 und 1a zeigen keine erfindungsgemäß beanspruchte Ausführungsform; sie werden zur Erläuterung des grundsätzlichen Aufbaus dieser Ausführungsform herangezogen. Es zeigen
- **Figur 1**: im Längs- und Meridianschnitt ein sitzreinigungsfähiges Doppelsitzventil mit wesentlichen Merkmalen eines Doppelsitzventils der gattungsgemäßen Art, wobei die Schließstellung dargestellt ist;
- **Figur 1a**: im Längs- und Meridianschnitt das Doppelsitzventils gemäß **Figur 1****,** wobei dieses sich in seiner Offenstellung befindet;
- **Figur 2**: im Längs- und Meridianschnitt das erfindungsgemäße Doppelsitzventil, wobei sich das Doppelsitzventil in seiner Schließstellung befindet und eine Begrenzung der Reinigungsmittelmenge nunmehr in beiden Sitzreinigungsstellungen jeweils mittels eines Drosselspaltes vorgesehen ist;
- **Figur 2a**: im Längs- und Meridianschnitt das Doppelsitzventil gemäß **Figur 2** in seiner Offenstellung;
- **Figur 3**: im Längs- und Ausschnitt eine vergrößerte Darstellung des Sitzbereichs des Doppelsitzventils gemäß den **Figuren 1** bis **2a****;**
- **Figur 4**: in schematischer und vergrößerter Darstellung eine Kontur des Sitzbereichs für das erste Schließglied und der angrenzenden zweiten Sitzfläche für ein Doppelsitzventil gemäß den **Figuren 1** bis **3****;**
- **Figur 5a**: in perspektivischer Darstellung ein einstückiges Anschweißteil, bestehend aus drei einen Verstellstangenabschnitt mit einem Ring jeweils fest verbindenden Traversen, zur Verbindung der ersten Ventilstange mit einem am leckagehohlraumfernen Ende des ersten Schließgliedes angeordneten Druckausgleichskolben und
- **Figur 5b**: im Meridianschnitt die Verbundkonstruktion aus erstem Schließglied und mittelbar angrenzendem Druckausgleichskolben, Anschweißteil und erste Ventilstange.

### DETAILLIERTE BESCHREIBUNG

Ein Doppelsitzventil 1 mit wesentlichen Merkmalen eines Doppelsitzventils der gattungsgemäßen Art (**Figuren 1** und **1a**) besteht im Wesentlichen aus einem Ventilgehäuse 10 mit einem ersten und einem zweiten Ventilgehäuseteil 1a bzw. 1b, zwei unabhängig voneinander bewegbaren Schließgliedern 3 und 4 mit jeweils zugeordneten Verstellstangen 3a bzw. 4a und einem Sitzring 2, der über eine innenseitige Verbindungsöffnung 2c eine Verbindung zwischen den Ventilgehäuseteilen 1a, 1 b herstellt.

Das als Schieberkolben ausgebildete erste Schließglied 3 (aktives Schließglied) findet in der Schließstellung des Doppelsitzventils 1 in einer von der Verbindungsöffnung 2c gebildeten ersten Sitzfläche 2a, die als zylindrische Sitzfläche ausgeführt ist, dichtend Aufnahme. Hierzu ist in dem Schieberkolben 3 eine erste Dichtung 6 vorgesehen, die ausschließlich durch radiale Vorspannung mit der ersten Sitzfläche 2a zusammenwirkt (radiale Dichtung mit Gleiteingriff). Das als Sitzteller ausgebildete zweite Schließglied 4 wirkt in der Schließstellung des Doppelsitzventils 1 mit einer zweiten Sitzfläche 2b zusammen, die senkrecht zur Längsachse des Doppelsitzventils 1 an der Oberseite des Sitzringes 2 ausgeführt ist. Die Abdichtung erfolgt über eine zweite Dichtung 7, die axial gegenüber der zweiten Sitzfläche 2b im Druckeingriff (Dichtung mit Druckeingriff) abdichtet.

Die beiden Schließglieder 3, 4 bilden sowohl in der dargestellten Schließ- als auch in einer Offenstellung zwischen sich einen Leckagehohlraum 5, der über eine Ablaufbohrung 3d, die einen sich an das erste Schließglied 3 anschließenden Verbindungsteil 3b und einen sich an letzterem fortsetzenden Druckausgleichskolben 3c jeweils zentrisch durchdringt, mit der Umgebung des Doppelsitzventils 1 verbunden ist.

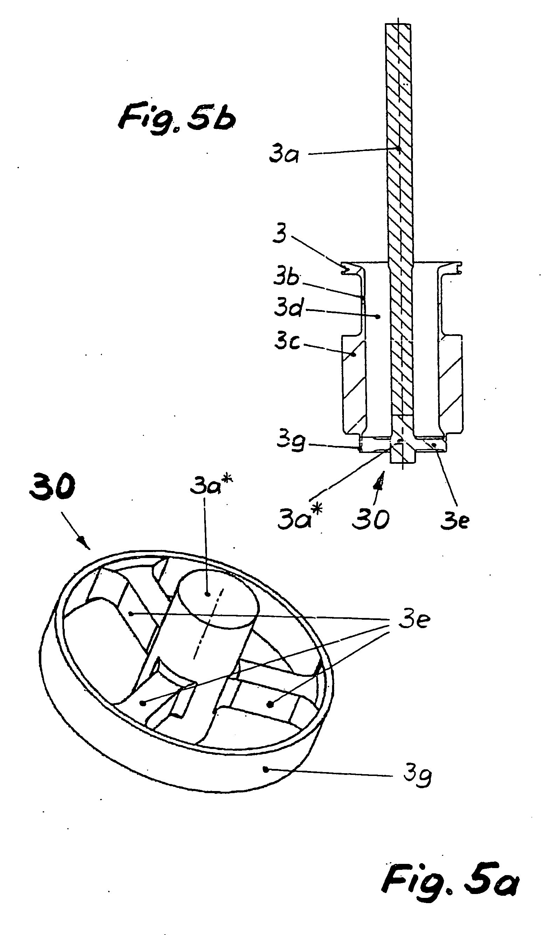

Üblicherweise ist die erste Verstellstange 3a im Bereich des ersten Schließgliedes 3 mit letzterem über mehrere die Ablaufbohrung 3d sternförmig und in radialer Richtung durchsetzende Stege fest verbunden. Im vorliegenden Falle sind diese Stege zwischen Verbindungsbohrungen 3d* gebildet (**Figur 3**), die über den Umfang verteilt das Schließglied 3 durchdringen und die Ablaufbohrung 3d mit dem Leckagehohlraum 5 verbinden. Da diese Stege zwischen den Verbindungsbohrungen 3d* negative Rückwirkungen auf die Strömungsverhältnisse und das Strömungsbild im Leckagehohlraum 5 haben können, ist bei dem Doppelsitzventil 1 vorzugsweise vorgesehen, diese mechanisch notwendigen Verbindungsstellen in Form von drei über den Umfang gleichmäßig verteilt angeordnete Traversen 3e ein Stück weit vom Leckagehohlraum 5 entfernt, vorzugsweise an das dem ersten Schließglied 3 abgewandte Ende des Druckausgleichskolbens 3c hin, zu verlagern (**Figuren 1****,** **1a**). Die feste Verbindung mit letzterem erfolgt über einen umlaufenden Ring 3g, mit dem die Traversen 3e radial außenseits fest verbunden sind. Zweckmäßig sind die Traversen 3e, der Ring 3g und ein Verstellstangenabschnitt 3a* in einem einstückigen Anschweißteil 30 zusammengefasst (**Figuren 5a****,** **1**).

Das zweite Schließglied 4 besitzt an seinem dem ersten Schließglied 3 zugewandten Ende eine Ausnehmung 4b mit einer im Wesentlichen zylindrischen, mit der zylindrischen ersten Sitzfläche 2a fluchtenden Umfangswand 4c (**Figuren 1** bis **3**). Diese Umfangswand 4c ist dabei so dimensioniert, dass sie während der Öffnungsbewegung einen Endabschnitt 3* und die radiale erste Dichtung 6 des ersten Schließgliedes 3 dichtend aufnimmt, bevor das zweite Schließglied 4 öffnet.

Die Umfangswand 4c der zylindrischen Ausnehmung 4b im zweiten Schließglied 4 geht an ihrem dem ersten Schließglied 3 abgewandten Ende in eine rotationssymmetrische Umlenkfläche 4d über (Anfangspunkt einer Kontur (K)) (**Figuren 3**, 1), und diese Umlenkfläche 4d mündet in einer im Wesentlichen senkrecht zur Längsachse des zweiten Schließgliedes 4 orientierten Stirnfläche 4e der Ausnehmung 4b mit einem zweiten Umlenkwinkel β aus. Eine von der Umfangswand 4c und einer schließgliedseitigen Anschlagfläche 4f gebildete zweite Umlaufkante U2 grenzt in der Schließstellung des zweiten Schließgliedes 4 unmittelbar an die erste Sitzfläche 2a an. Im Meridianschnitt gesehen weist die Umlenkfläche 4d eine Kontur K mit knickfreiem Verlauf auf, wobei sich ein an die Umfangswand 4c angrenzender erster Abschnitt K1 der Kontur K über weitere Abschnitte K2 und K3 fortsetzt (**Figur 3**) und der Richtungsvektor im Endpunkt des letzten Abschnitts K3 bzw. Kn in die zentrisch im ersten Schließglied 3 angeordnete Ablaufbohrung 3d bzw. die Verbindungsbohrungen 3d* weist, ohne mit dem ersten Schließglied 3 im Bereich seiner den Leckagehohlraum 5 berandenden Bereiche zu kollidieren.

Damit eine erste Sitzreinigungsströmung R1, die nach einem, bezogen auf die Darstellungslage, nach unten gerichteten ersten Teilhub T1 des ersten Schließgliedes 3 über den Spalt zwischen der ersten Dichtung 6 und der ersten Sitzfläche 2a herangeführt wird, möglichst tangential, ohne staudruckbildend wirksam zu werden, an der Stirnfläche 4e der Ausnehmung 4b entlanggeführt werden kann (**Figur 3**), hinterschneidet die Umlenkfläche 4d die Stirnfläche 4e um einen axialen Hinterschneidungsabstand y. Eine dem Leckagehohlraum 5 zugewandte stirnseitige Begrenzung des ersten Schließgliedes 3 besitzt einen axialen Sicherheitsabstand x vom Richtungsvektor an der Austrittsstelle der zweiten Sitzfläche 2b in einen an der ersten Sitzfläche 2a ausgebildeten ersten Endabschnitt 2g, wobei die Austrittsstelle in Form einer ersten Umlaufkante U1 ausgebildet ist.

In der Offenstellung des Doppelsitzventils (**Figur 1a**), wenn ein voller Öffnungshub H realisiert ist, wird deutlich, dass die an der Umfangswand 4c der Ausnehmung 4b radial wirkende erste Dichtung 6 für eine sichere Abdichtung der beiden Schließglieder 3, 4 zwischen den über die Verbindungsöffnung 2c miteinander verbundenen Ventilgehäuseteilen 1a, 1b einerseits und dem Leckagehohlraum 5 andererseits sorgt.

Die **Figuren 1** und **3** verdeutlichen, dass die zylindrische Umfangswand 4c an ihrem dem ersten Schließglied 3 zugewandten Ende mit einer zweiten Einfahrschräge 4h beginnt, die bevorzugt mit einem Anschrägungswinkel λ im Bereich von 5 bis 15 Grad und hier wiederum bevorzugt mit 15 Grad ausgeführt ist, und dass die Umfangswand 4c an ihrem anderen Ende in den ersten Abschnitt K1 übergeht. Letzterer ist unter einem ersten Umlenkwinkel ε gegenüber der Umfangswand 4c radial nach außen angewinkelt, wobei dieser erste Umlenkwinkel ε weniger als 15 Grad beträgt.

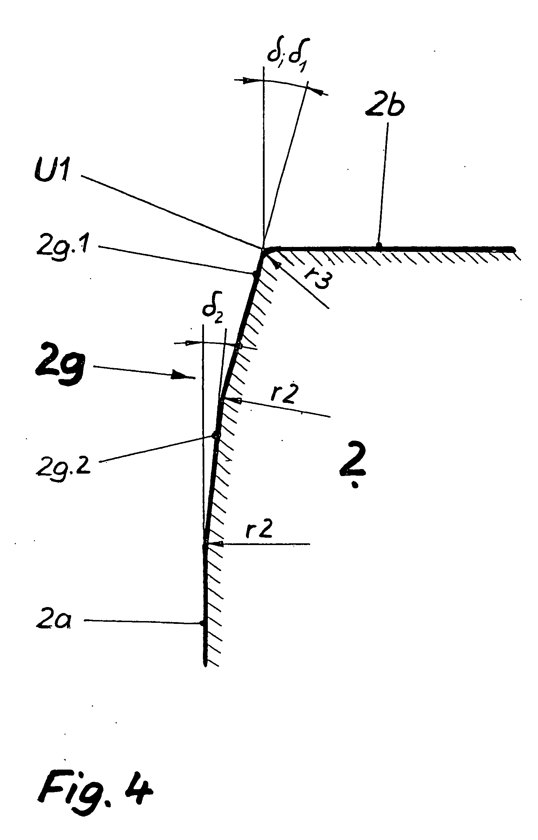

**Figur 3** verdeutlicht weiterhin, dass in der Schließstellung des Doppelsitzventils 1 die erste und die zweite Umlaufkante U1, U2 deckungsgleich am Leckagehohlraum 5 abschließen. Dabei kann der erste Endabschnitt 2g als konischer Abschnitt (erste Einfahrschräge) mit ausschließlich gekrümmten oder gekrümmten und geraden Konturelementen ausgebildet sein, der sich mit einem Abrundungsradius r2 an die Sitzfläche 2a anschließt (s. auch **Figuren 4** **und** **1a**) und sich zum zweiten Schließglied 4 hin öffnet. Der erste Endabschnitt 2g ist um einen Anstellwinkel δ gegen die erste Sitzfläche 2a geneigt. Der Anstellwinkel δ ist im Bereich 0 bis 15 Grad, bevorzugt im Bereich 5 bis 15 Grad und hier wiederum bevorzugt mit δ = 15 Grad ausgeführt.

Eine weitere Optimierung des ersten Endabschnitts 2g in Form einer weiter verbesserten Einfahrschräge zeichnet sich gemäß **Figur 4** dadurch aus, dass der erste Endabschnitt 2g durch zwei mit dem Abrundungsradius r2 abgerundet ineinander übergehende Kegelmantelflächen gebildet ist, wobei ein sich an die erste Sitzfläche 2a unmittelbar anschließender zweiter Kegelmantel 2g.2 um einen zweiten Anstellwinkel δ₂ gegen die erste Sitzfläche 2a und der andere (der erste) Kegelmantel 2g.1 um einen ersten Anstellwinkel δ₁ gegen die erste Sitzfläche 2a geneigt sind. Der erste Anstellwinkel δ₁ ist im Bereich 7,5 bis 15 Grad, bevorzugt mit δ₁ = 15 Grad und der zweite Anstellwinkel δ₂ ist bevorzugt im Bereich 5 bis 10 Grad, bevorzugt mit δ₂= 7,5 Grad ausgeführt.

Weiterhin ist in den **Figuren 1** bis **3** gezeigt, dass die Stirnfläche des ersten Schließgliedes 3 zur Ablaufbohrung 3d hin mit einer abfallenden, konischen Anschrägung 3f versehen ist, wobei letztere bevorzugt als Kegelmantelfläche ausgeführt und diese gegenüber der Grundfläche des Kegels um einen Neigungswin kel ζ geneigt ist. Dieser Neigungswinkel ζ wird bevorzugt im Bereich 10 bis 20 Grad und hier wiederum bevorzugt mit ζ = 15 Grad ausgeführt.

Die nach Vollzug des ersten Teilhubes **T1** aus dem Spalt zwischen der ersten Dichtung 6 und der ersten Sitzfläche 2a (**Figur 3**) im Zuge der Sitzreinigung des ersten Schließgliedes 3 austretende erste Sitzreinigungsströmung R1 strömt zunächst senkrecht an der ersten Sitzfläche 2a entlang, folgt, ohne jeweils abzulösen, dem Verlauf des als erste Einfahrschräge 2g bzw. als Kegelmäntel 2g.2, 2g.1 (**Figur 4**) ausgebildeten Endabschnitts 3*, überbrückt die Einfahrschräge 4h, folgt der Umfangswand 4c und dem sich anschließenden, unter dem zweiten Umlenkwinkel ε abgewinkelten ersten Abschnitt K1 und tritt stoßfrei in den weiteren Verlauf der Umlenkfläche 4d mit ihren nachfolgenden Abschnitten K2 und K3 ein, wird dort entsprechend der Kontur K umgelenkt, verlässt den dritten und letzten Abschnitt K3 (K3 = Kn) mit dem zweiten Umlenkwinkel β, legt sich weitgehend tangential an die Stirnfläche 4e an und gelangt schließlich in den Bereich der Ablaufbohrung 3d bzw. die Verbindungsbohrungen 3d*. Damit die erste Sitzreinigungsströmung R1 an der zweiten Umlaufkante U2 keinen Staudruck ausbilden kann, grenzt letztere in der Schließstellung des zweiten Schließgliedes 4 unmittelbar an den ersten Endabschnitt 2g an und ist mit einer kleinstmöglichen ersten Eckenabrundung r1 abgerundet.

In **Figur 3** ist die Kontur K mit knickfreiem Verlauf im Einzelnen detailliert bezeichnet. Der erste Abschnitt K1 und der aus der Stirnfläche 4e ausmündende dritte und letzte Abschnitt K3 (K3 = Kn) sind jeweils geradlinig ausgeführt und diese Abschnitte K1 und K3 sind über einen zweiten Abschnitt K2, der letztere tangential mit einem größtmöglichen Umlenkradius abrundet, miteinander verbunden.

Eine weitere Ausformung der Umlenkfläche 4d sieht vor, dass die Kontur K aus einer Abfolge gekrümmter Abschnitte K1 bis Kn besteht (z.B. Kreisbogen, Ellipsen, Parabeln, Hyperbein), die an ihren jeweiligen Übergangsstellen jeweils eine gemeinsame Tangente besitzen. Gemäß einer anderen Ausgestaltung ist die Kontur K aus einem einzigen Abschnitt kontinuierlich veränderter Krümmung gebildet (z.B. Spirale oder ein anderer mathematisch geschlossen beschreibbarer Kurvenverlauf). Die Kontur K ist nach einem weiteren Vorschlag mit einem einzigen Abschnitt mit konstanter Krümmung ausgeführt (z.B. ein einziger Kreisbogen mit dem erforderlichen tangentialen Ein- und Austritt unter dem ersten Umlenkwinkel ε bzw. dem zweiten Umlenkwinkel β).

Bei dem Doppelsitzventil 1 ist die zweite Sitzfläche 2b senkrecht zur Längsachse des Doppelsitzventils (**Figuren 1****,** **1a****,** **2****,** **2a****,** **3**) angeordnet, wobei die im zweiten Schließglied 4 angeordnete zweite Dichtung 7 axial gegenüber dieser zweiten Sitzfläche 2b im Druckeingriff abdichtet. Diese Lösung ist dann möglich, wenn die axial wirkende zweite Dichtung 7 so duktil und eine volumenkonstante Formveränderung derart möglich ist, dass die feste Anschlagposition des zweiten Schließgliedes 4 über die schließgliedseitige Anschlagfläche 4f im Bereich der in die erste Sitzfläche 2a austretenden zweiten Sitzfläche 2b sichergestellt ist. Die die zweite Dichtung 7 radial außenseits berandende Stirnfläche des zweiten Schließgliedes 4 tritt zur Sicherstellung der vorstehend beschriebenen definierten festen Anschlagposition durch die Anschlagfläche 4f in axialer Richtung ein Stück zurück (**Figur 3**).

Die zweite Sitzfläche 2b kann auch kegelförmig ausgeführt sein, wobei die zweite Dichtung 7 axial/radial gegenüber der zweiten Sitzfläche 2b im Gleit-/Druckeingriff abdichtet.

Die Sitzreinigung des zweiten Schließgliedes 4 erfolgt dadurch (**Figur 3**), dass letzteres um einen zweiten Teilhub T2 spaltweit von seiner zugeordneten zweiten Sitzfläche 2b angelüftet und Reinigungsmittel in Form einer zweiten Sitzreinigungsströmung R2 aus dem angrenzenden ersten Ventilgehäuseteil 1b über die freigelegte zweite Sitzfläche 2b in den Leckagehohlraum 5 geführt wird. Um sicherzustellen, dass die zweite Sitzreinigungsströmung R2 nicht vorzeitig in Richtung des ersten Schließgliedes 3 abgelenkt wird, ist die von der zweiten Sitzfläche 2b und dem ersten Endabschnitt 2g gebildete erste Umlaufkante U1 mit einer kleinstmöglichen zweiten Eckenabrundung r3 abgerundet (**Figur 4**), wodurch an dieser Stelle eine definierte Strömungsabrissstelle entsteht. Durch diese Maßnahme wird sichergestellt, dass die zweite Sitzreinigungsströmung R2 nicht auf den Sitzbereich der ersten Dichtung 6 gerichtet ist.

Das erste Schließglied 3 ist bei der Sitzreinigung des zweiten Schließgliedes 4 axial derart positioniert, dass die zweite Sitzreinigungsströmung R2 unbehindert über das erste Schließglied 3 hinweg strömen kann. Abhängig von den gegebenen Druckverhältnissen und unter dem Einfluss der Schwerkraft bei Anordnung des Doppelsitzventils 1 gemäß Zeichnungslage nimmt der Flüssigkeitsstrahl einen leicht parabelförmigen Verlauf, so dass die Stirnfläche des ersten Schließgliedes 3 mit seiner Anschrägung 3f tangential überströmt wird, was aus reinigungstechnischen Gründen wünschenswert ist. Durch diese Strömungsführung und Positionierung des ersten Schließgliedes 3 wird sogar ein Besaugen des Sitzbereichs der ersten Dichtung 6 erreicht, so dass selbst bei Verlust oder signifikanter Beschädigung der ersten Dichtung 6 kein Reinigungsmittel R2 in das benachbarte erste Ventilgehäuseteil 1a eintreten kann.

Das leckageraumseitige Ende des Spaltes zwischen dem zweiten Schließglied 4 und der zugeordneten zweiten Sitzfläche 2b ist durch die vorstehend beschriebene feste Anschlagposition des zweiten Schließgliedes 4 mit seiner Anschlagfläche 4f an der zweiten Sitzfläche 2b weitestgehend dicht verschlossen (soweit dies bei einer Anlage fest gegen fest, vorzugsweise Metall gegen Metall grundsätzlich möglich ist). Reinigungsflüssigkeit der ersten Sitzreinigungsströmung R1 kann nicht mehr in den Spalt zwischen dem zweiten Schließglied 4 und der zugeordneten zweiten Sitzfläche 2b und damit in den Bereich der zweiten Dichtung 7 eintreten. Selbst bei ggf. stark beschädigter oder ggf. gänzlich entfernter zweiter Dichtung 7 ist daher kein Durchtritt für Reinigungsflüssigkeit R1 mehr gegeben.

Die erfindungsgemäß beanspruchte Ausführungsform des Doppelsitzventils 1 zeigen die **Figur 2** (Schließstellung) und die **Figur 2a** (Offenstellung). Der am ersten Schließglied 3 leckageraumseitig vorgesehene Endabschnitt 3* ist in Form eines zylindrischen ersten Ansatzes ausgebildet, der mit dem zugeordneten Abschnitt der ersten Sitzfläche 2a einen ringförmigen ersten Drosselspalt D1 (siehe auch **Figur 3**) bildet. Dieser erste Drosselspalt D1 wird wirksam, wenn das erste Schließglied 3 um den ersten Teilhub T1 so weit innerhalb der zylindrischen ersten Sitzfläche 2a nach unten verschoben wird, dass die erste Dichtung 6 von letzterer freikommt und die erste Sitzreinigungsströmung R1 aus dem ersten Ventilgehäuseteil 1a herangeführt und in den Leckagehohlraum 5 eingeleitet wird.

Das zweite Schließglied 4 weist, bezogen auf seine zweite Dichtung 7, radial außenseits eine zylindrische Umfangskontur 4* auf, gebildet durch eine zylindrische äußere Form des zweiten Schließgliedes 4, die mit einer ringförmigen zylindrischen Ausnehmung 2d in der Verbindungsöffnung 2c auf der Seite des zweiten Schließgliedes 4 einen ringförmigen zweiten Drosselspalt D2 bildet (**Figur 3**). Dieser zweite Drosselspalt D2 wird wirksam, wenn das zweite Schließglied 4 um den zweiten Teilhub T2 von der zweiten Sitzfläche 2b angehoben wird, so dass die zweite Sitzreinigungsströmung R2 aus dem zweiten Ventilgehäuseteil 1b herangeführt und in den Leckagehohlraum 5 eingeleitet wird.

In **Figur 5a** ist der einstückige Anschweißteil 30 dargestellt, der aus dem Verstellstangenabschnitt 3a*, den drei Traversen 3e und dem Ring 3g gebildet ist. Die drei über den Umfang des Verstellstangenabschnitts 3a* gleichmäßig verteilt angeordneten Traversen 3e sind fest mit diesem verbunden. Sie sind jeweils radial außenseits gleichfalls fest mit dem umlaufenden Ring 3g verbunden. Der Anschweißteil 30 ist außenseits über den Ring 3g an den den leckagehohlraumfernen Abschnitt der Ablaufbohrung 3d begrenzenden Druckausgleichskolben 3c (s. **Figur 5b**) und innenseits über den Verstellstangenabschnitt 3a* an die erste Verstellstange 3a angeschweißt. Dabei ist der Ring 3g in seinem Innendurchmesser derart gegenüber dem Durchmesser der Ablaufbohrung 3d unter Zwischenschaltung eines konisch sich erweiternden Übergangsbereichs vergrößert, dass der Innendurchgang der Ablaufbohrung 3d durch die Traversen 3e nicht geschmälert ist.

### BEZUGSZEICHENLISTE DER VERWENDETEN ABKÜRZUNGEN

- 1: Doppelsitzventil
- 10: Ventilgehäuse
- 1a: erstes Ventilgehäuseteil
- 1b: zweites Ventilgehäuseteil

- 2: Sitzring
- 2a: erste Sitzfläche (zylindrische Sitzfläche)
- 2b: zweite Sitzfläche (axial; axial/radial)
- 2c: Verbindungsöffnung
- 2d: ringförmige Ausnehmung
- 2g: erster Endabschnitt (erste Einfahrschräge)
- 2g.1: erster Kegelmantel
- 2g.2: zweiter Kegelmantel

- 3: erstes Schließglied (Schieberkolben)
- 3*: Endabschnitt (erster zylindrischer Ansatz)
- 3a: erste Verstellstange
- 3b: Verbindungsteil
- 3c: Druckausgleichskolben
- 3d: Ablaufbohrung
- 3d*: Verbindungsbohrung
- 3f: Anschrägung

- 30: Anschweißteil
- 3a*: Verstellstangenabschnitt
- 3e: Traverse
- 3g: Ring

- 4: zweites Schließglied
- 4*: zylindrische Umfangskontur
- 4a: zweite Verstellstange
- 4b: Ausnehmung
- 4c: Umfangswand
- 4d: Umlenkfläche
- 4e: Stirnfläche
- 4f: Anschlagfläche (schließgliedseitig)
- 4h: zweite Einfahrschräge

- 5: Leckagehohlraum
- 6: erste Dichtung (radial)
- 7: zweite Dichtung (axial; radial; axial/radial)

- r1: erste Eckenabrundung (zweites Schließglied 4)
- r2: Abrundungsradius (erste Einfahrschräge 2g; 2g.1, 2g.2)
- r3: zweite Eckenabrundung (gehäuseseitig; Sitzring 2)

- x: axialer Sicherheitsabstand
- y: axialer Hinterschneidungsabstand

- β: zweiter Umlenkwinkel
- δ: Anstellwinkel (der ersten Einfahrschräge 2g)
- δ₁: erster Anstellwinkel (erster konischer Abschnitt 2g.1)
- δ₂: zweiter Anstellwinkel (zweiter konischer Abschnitt 2g.2)
- ε: erster Umlenkwinkel
- ζ: Neigungswinkel
- λ: Anschrägungswinkel (der zweiten Einfahrschräge 4h)

- D1: erster Drosselspalt
- D2: zweiter Drosselspalt
- H: voller Öffnungshub (volle Offenstellung)

- K: Kontur der Umlenkfläche 4b
- K1: erster Abschnitt (erste Gerade)
- K2: zweiter Abschnitt (gekrümmte Kontur)
- K3: dritter Abschnitt (zweite Gerade)
- Kn: letzter Abschnitt

- R1: erste Sitzreinigungsströmung
- R2: zweite Sitzreinigungsströmung

- T1: erster Teilhub (erste Teiloffenstellung/erste Sitzreinigungsstellung)
- T2: zweiter Teilhub (zweite Teiloffenstellung/zweite Sitzreinigungsstellung)

- U1: erste Umlaufkante
- U2: zweite Umlaufkante

## Patentansprüche

1. Sitzreinigungsfähiges Doppelsitzventil mit zwei seriell angeordneten, relativ zueinander bewegbaren Schließgliedern (3, 4), die in der Schließstellung des Doppelsitzventils (1) das Überströmen von Fluiden von einem Ventilgehäuseteil (1a; 1b) in ein anderes (1b; 1a) verhindern, die sowohl in der Schließ- als auch in der Offenstellung einen Leckagehohlraum (5) zwischen sich begrenzen, der mit der Umgebung des Doppelsitzventils (1) verbunden ist, wobei in der Schließstellung das als Schieberkolben ausgebildete erste Schließglied (3) in einer die Ventilgehäuseteile (1a, 1b) miteinander verbindenden Verbindungsöffnung (2c) dichtend Aufnahme findet und im Zuge seiner Öffnungsbewegung am einer zweiten Sitzfläche (2b) zugeordneten, eine zweite Dichtung (7) aufweisenden zweiten Schließglied (4) dichtend zur Anlage kommt und letzteres bei der weiteren Öffnungsbewegung gleichfalls in eine Offenstellung (H) überführt wird, wobei das erste Schließglied (3) an seinem Endabschnitt (3*) eine erste Dichtung (6) aufweist, die radial gegenüber einer in der Verbindungsöffnung (2c) ausgebildeten zylindrischen ersten Sitzfläche (2a) abdichtet, wobei das zweite Schließglied (4) an seinem dem ersten Schließglied (3) zugewandten Ende eine Ausnehmung (4b) mit einer im wesentlichen zylindrischen, mit der zylindrischen ersten Sitzfläche (2a) fluchtenden Umfangswand (4c) besitzt, und die Ausnehmung (4b) so dimensioniert ist, um während der Öffnungsbewegung den Endabschnitt (3*) und die radiale erste Dichtung (6) des ersten Schließgliedes (3) dichtend aufzunehmen, bevor das zweite Schließglied (4) öffnet, mit Schließgliedern (3, 4), die unabhängig voneinander durch einen Teilhub jeweils spaltweft in eine Sitzreinigungsstellung zwecks Spülung ihrer koaxialen Sitzflächen (2a, 2b) überführbar sind, wobei das zweite Schließglied (4) durch einen der Öffnungsbewegung gleichgerichteten zweiten Teilhub (T2) und das erste Schließglied (3) durch einen der Öffnungsbewegung entgegengerichteten ersten Teilhub (T1) in seine jeweilige Sitzreinigungsstellung gelangen, wobei das zweite Schließglied (4) in seiner Schließstellung mit einer Anschlagfläche (4f), die mit der Umfangswand (4c; 4h) eine zweite Umlaufkante (U2) ausbildet, am Ventilgehäuse (10; 1a, 1b) anliegt, und zwar unmittelbar an die erste Sitzfläche (2a) angrenzend, wobei die Umfangswand (4c) an ihrem dem ersten Schließglied (3) abgewandten Ende in eine rotationssymmetrische Umlenkfläche (4d) übergeht und diese Umlenkfläche (4d) in einer im Wesentlichen senkrecht zur Längsachse des zweiten Schließgliedes (4) orientierten Stirnfläche (4e) der Ausnehmung (4b) ausmündet , und wobei, im Meridianschnitt gesehen, die Umlenkfläche (4d) eine Kontur (K) mit knickfreiem Verlauf aufweist, und wobei ein Richtungsvektor im Ausmündungspunkt der Umlenkfläche (4d) in eine im ersten Schließglied (3) angeordnete zentrische Ablaufbohrung (3d; 3d*) weist, ohne mit dem ersten Schließglied (3) im Bereich seiner den Leckagehohlraum (5) berandenden Bereiche staudruckbildend zu kollidieren,
**dadurch gekennzeichnet,**
**dass** die Anschlagfläche (4f) an einer der zweiten Dichtung (7) radial innenseits benachbarten Begrenzungsfläche des zweiten Schließgliedes (4) angeordnet ist und in der Schließstellung des zweiten Schließgliedes (4) an der zweiten Sitzfläche (2b) anliegt, dass das zweite Schließglied (4), bezogen auf seine zweite Dichtung (7), radial außenseits eine zylindrische Umfangskontur (4*) aufweist, und dass die Umfangskontur (4*) mit einer ringförmigen zylindrischen Ausnehmung (2d) in der Verbindungsöffnung (2c) auf der Seite des zweiten Schließgliedes (4) einen ringförmigen zweiten Drosselspalt (D2) bildet.

2. Doppelsitzventil nach Anspruch 1,
**dadurch gekennzeichnet,**
**dass** eine dem Leckagehohlraum (5) zugewandte stirnseitige Begrenzung des ersten Schließgliedes (3) einen axialen Sicherheitsabstand (x) vom Richtungsvektor an einer als eine erste Umlaufkante (U1) ausgebildeten Austrittsstelle der zweiten Sitzfläche (2b) in die erste Sitzfläche (2a) besitzt.

3. Doppelsitzventil nach Anspruch 2,
**dadurch gekennzeichnet,**
**dass** der Sicherheitsabstand (x) wenigstens so groß wie die Summe aller Fertigungstoleranzen der Bauteile des Doppelsitzventils (1) ist, die in der Schließstellung des ersten Schließgliedes (3) dessen geringsten axialen Abstand zur zweiten Sitzfläche (2b) bestimmen.

4. Doppelsitzventil nach einem der Ansprüche 1 bis 3,
**dadurch gekennzeichnet,**
**dass** die von der zweiten Sitzfläche (2b) und der ersten Sitzfläche (2a) gebildete erste Umlaufkante (U1) mit einer kleinstmöglichen zweiten Eckenabrundung (r3) abgerundet ist.

5. Doppelsitzventil nach einem der Ansprüche 1 bis 4,
**dadurch gekennzeichnet,**
**dass** die zylindrische Umfangswand (4c) in eine zweite Einfahrschräge (4h) zur Erzielung eines glatten Überganges der radialen ersten Dichtung (6) ausmündet und die zweite Einfahrschräge (4h) mit der Anschlagfläche (4f) die zweite Umlaufkante (U2) ausbildet.

6. Doppelsitzventil nach einem der Ansprüche 1 bis 5,
**dadurch gekennzeichnet,**
**dass** die zweite Umlaufkante (U2) mit einer kleinstmöglichen ersten Eckenabrundung (r1) abgerundet ist.

7. Doppelsitzventil nach einem der Ansprüche 1 bis 6,
**dadurch gekennzeichnet,**
**dass** die Umlenkfläche (4d) die Stirnfläche (4e) um einen axialen Hinterschneidungsabstand (y) hinterschneidet.

8. Doppelsitzventil nach einem der Ansprüche 1 bis 7,
**dadurch gekennzeichnet,**
● **dass** die Kontur (K) aus einer Abfolge gekrümmter Abschnitte (K1, K2, K3, ..., Kn) besteht, die an ihren jeweiligen Übergangsstellen jeweils eine gemeinsame Tangente besitzen
● oder dass die Kontur (K) aus einem einzigen Abschnitt kontinuierlich veränderter Krümmungen besteht
● oder dass die Kontur (K) aus einem einzigen Abschnitt mit konstanter Krümmung besteht.

9. Doppelsitzventil nach einem der Ansprüche 1 bis 8,
**dadurch gekennzeichnet,**
**dass** der Richtungsvektor des letzten Abschnitts (Kn) gegenüber der Stirnfläche (4e) einen zweiten Umlenkwinkel (β), bevorzugt im Bereich 5 ≤ β ≤ 20 Grad, bevorzugt β = 15 Grad aufweist.

10. Doppelsitzventil nach einem der Ansprüche 1 bis 9,
**dadurch gekennzeichnet,**
**dass** die Ablaufbohrung (3d) über mehrere, über den Umfang verteilte Verbindungsbohrungen (3d*) den Leckagehohlraum (5) mit der Umgebung des Doppelsitzventils (1) verbindet, und dass die dem Leckagehohlraum (5) zugewandte stirnseitige Begrenzung des ersten Schließgliedes (3) eine allseits umfänglich zur Ablaufbohrung (3d) hin abfallende Anschrägung (3f) aufweist.

11. Doppelsitzventil nach einem der Ansprüche 1 bis 9,
**dadurch gekennzeichnet,**
**dass** die Ablaufbohrung (3d) den Leckagehohlraum (5) mit der Umgebung des Doppelsitzventils (1) verbindet, dass die dem Leckagehohlraum (5) zugewandte stirnseitige Begrenzung des ersten Schließgliedes (3) eine allseits umfänglich zur Ablaufbohrung (3d) hin abfallende Anschrägung (3f) aufweist, und dass eine mit dem ersten Schließglied (3) verbundene erste Verstellstange (3a) eine mit dem zweiten Schließglied (4) verbundene, als Hohlstange ausgeführte zweite Verstellstange (4a) konzentrisch durchdringt, sich fliegend durch die Ablaufbohrung (3d) hindurch fortsetzt und an einem dem zweiten Schließglied (4) abgewandten Ende des ersten Schließgliedes (3) mit letzterem über wenigstens eine im Wesentlichen radial orientierte Traverse (3e) fest verbunden ist.

12. Doppelsitzventil nach Anspruch 10 oder 11,
**dadurch gekennzeichnet,**
**dass** die Anschrägung (3f) als Kegelmantelfläche ausgeführt ist.

13. Doppelsitzventil nach Anspruch 12,
**dadurch gekennzeichnet,**
**dass** die Kegelmantelfläche (3f) gegenüber der Grundfläche des Kegels um einen Neigungswinkel (ζ), bevorzugt im Bereich 10 ≤ ζ ≤ 20 Grad, bevorzugt ζ = 15 Grad geneigt ist.

14. Doppelsitzventil nach einem der Ansprüche 11 bis 13,
**dadurch gekennzeichnet,**
**dass** drei über den Umfang gleichmäßig verteilt angeordnete Traversen (3e) fest an einem Verstellstangenabschnitt (3a*) vorgesehen sind, die jeweils radial außenseits fest mit einem umlaufenden Ring (3g) verbunden sind, und dass der Verstellstangenabschnitt (3a*), die Traversen (3e) und der Ring (3g) einen einstückigen Anschweißteil (30) bilden.

15. Doppelsitzventil nach Anspruch 14,
**dadurch gekennzeichnet,**
**dass** der Anschweißteil (30) außenseits über den Ring (3g) an einen einen leckagehohlraumfernen Abschnitt der Ablaufbohrung (3d) begrenzenden Druckausgleichskolben (3c) und innenseits über den Verstellstangenabschnitt (3a*) an die erste Verstellstange (3a) anschließt, und dass der Ring (3g) in seinem Innendurchmesser derart gegenüber dem Durchmesser der Ablaufbohrung (3d) unter Zwischenschaltung eines konisch sich erweiternden Übergangsbereichs vergrößert ist, dass der Innendurchgang der Ablaufbohrung (3d) durch die Traversen (3e) nicht geschmälert ist.

16. Doppelsitzventil nach einem der Ansprüche 1 bis 15,
**dadurch gekennzeichnet,**
**dass** die zweite Sitzfläche (2b) kegelförmig ausgeführt ist, und dass die zweite Dichtung (7) axial/radial gegenüber der zweiten Sitzfläche (2b) im Gleit-/Druckeingriff abdichtet.

17. Doppelsitzventil nach einem der Ansprüche 1 bis 15,
**dadurch gekennzeichnet,**
**dass** die zweite Sitzfläche (2b) senkrecht zur Längsachse des Doppelsitzventils (1) angeordnet ist, und dass die zweite Dichtung (7) axial gegenüber der zweiten Sitzfläche (2b) im Druckeingriff abdichtet.

18. Doppelsitzventil nach einem der Ansprüche 1 bis 17,
**dadurch gekennzeichnet,**
**dass** der am ersten Schließglied (3) leckageraumseitig vorgesehene Endabschnitt (3*) in Form eines zylindrischen Ansatzes ausgebildet ist, der mit der ersten Sitzfläche (2a) einen ringförmigen ersten Drosselspalt (D1) bildet.

## Claims

1. A double seat valve, the seats of which can be cleaned, with two serially arranged closing elements (3, 4) which can be moved relative to one another and which in the closed position of the double seat valve (1) prevent overflow of fluids from one valve housing part (1a; 1b) into another (1b; 1a), which border between themselves, both in the closed and also in the open position, a leakage cavity (5) which is connected to the vicinity of the double seat valve (1), in the closed position the first closing element (3) which is made as a slide piston being accommodated to form a seal In a connection opening (2c) which joins the valve housing parts (1a, 1b) to one another and in the course of its opening motion making sealing contact with a second closing element (4) which has a second seal (7) and which is associated with the second seat surface (2b), and the latter closing element in the continued opening motion being likewise transferred into the open position (H), the first closing element (3) in its end section (3*) having a first seal (6) which radially seals relative to a cylindrical first seat surface (2a) which is made in the connection opening (2c), the second closing element (4) on its end facing the first closing element (3) having a recess (4b) with an essentially cylindrical circumferential wall (4c) which is flush with the cylindrical first seat surface (2a) and the recess (4b) being dimensioned in such a way as to accommodate the end section (3*) and the radial first seal (6) of the first closing element (3) to form a seal during the opening motion before the second closing element (4) opens, with closing elements (3, 4) which can be transferred independently of one another by a respective partial lift gap-wide into a seat cleaning position for purposes of flushing their coaxial seat surfaces (2a, 2b), the second closing element (4) by a second partial lift (T2) which acts in the same direction as the opening motion and the first closing element (3) by a first partial lift (T1) which acts in the direction opposite the opening motion reaching its respective seat cleaning position, the second closing element (4) in its closed position with a stop face (4f) which forms a second circumferential edge (U2) with the circumferential wall (4c; 4h) adjoining the valve housing (10; 1a; 1b), directly bordering the first seat surface (2a), the circumferential wall (4c) on its end facing away from the first closing element (3) undergoing transition into a rotationally symmetrical deflection surface (4d) and this deflection surface (4d) discharging in a front face (4e) of the recess (4b) which is oriented essentially perpendicular to the longitudinal axis of the second closing element (4), and viewed in a vertical center section, the deflection surface (4d) having a contour (K) which runs without bends, and a direction vector at the discharge point of the deflection surface (4d) being oriented toward the center discharge bore (3d; 3d*) located in the first closing element (3) without colliding with the first closing element (3) in the area of its regions enclosing the leakage cavity (5) to form impact pressure,
**characterized in that**
the stop surface (4f) is arranged at a border surface of the second closing element (4) radially inside adjacent to the second seat surface (7) and in the closed position of the second closing element (4) adjoins the second seat surface (2b), the second closing element (4), relative to its second seal (7), radially outside has a cylindrical circumferential contour (4*), and that the circumferential contour (4*) forms an annular second throttle gap (D2) with an annular cylindrical recess (2d) in the connection opening (2c) on the side of the second closing element (4).

2. The double seat valve according to claim 1,
**characterized in that**
a front face boundary of the first closing element (3) which faces the leakage cavity (5) has an axial safety distance (x) from the direction vector at an exit point of the second seat surface (2b) made as a first circumferential edge (U1) into the first seat surface (2a).

3. The double seat valve according to claim 2,
**characterized in that**
the safety distance (x) is at least as large as the sum of all production tolerances of the components of the double seat valve (1) which in the closed position of the first closing element (3) determine its smallest axial distance to the second seat surface (2b).

4. The double seat valve according to one of claims 1 to 3,
**characterized In that**
the first circumferential edge (U1) which is formed by the second seat surface (2b) and the first seat surface (2a) is rounded with a smallest possible second corner rounding (r3).

5. The double seat valve according to one of claims 1 to 4,
**characterized in that**
the cylindrical circumferential wall (4c) ends in the second inlet slope (4h) to effect a smooth transition of the radial first seal (6) and the second inlet slope (4h) with the stop face (4f) forms the second circumferential edge (U2).

6. The double seat valve according to one of claims 1 to 5,
**characterized in that**
the second circumferential edge (U2) is rounded with the smallest possible first corner rounding (r1).

7. The double seat valve according to one of claims 1 to 6,
**characterized in that**
the deflection surface (4d) undercuts the front face (4e) by the axial undercutting distance (y).

8. The double seat valve according to one of claims 1 to 7,
**characterized in that**
● the contour (K) consists of a sequence of curved segments (K1, K2, K3,..., Kn) which at their respective transition sites each have a common tangent
● or that the contour (K) consists of a single section of continuously altered curvatures
● or that the contour (K) is formed from a single section with a constant curvature.

9. The double seat valve according to one of claims 1 to 8,
**characterized in that**
the direction vector of the last section (Kn) relative to the front face (4e) has a second deflection angle (β), preferably in the range 5 ≤ β ≤ 20 degrees, preferably β = 15 degrees.

10. The double seat valve according to one of claims 1 to 9,
**characterized in that**
the discharge bore (3d) connects the leakage cavity (5) to the vicinity of the double seat valve (1) by way of several connecting bores (3d*) which are distributed over the periphery, and that the front-face boundary of the first closing element (3) which faces the leakage cavity (5) has a chamfer (3f) which declines toward the discharge bore (3d) circumferentially on all sides.

11. The double seat valve according to one of claims 1 to 9,
**characterized in that**
the discharge bore (3d) connects the leakage cavity (5) to the vicinity of the double seat valve (1), that the front-face boundary of the first closing element (3) which faces the leakage cavity (5) has a chamfer (3f) which declines toward the discharge bore (3d) circumferentially on all sides, and that a first shifting rod (3a) which is connected to the first closing element (3) concentrically penetrates a second shifting rod (4a) which is made as a hollow rod and which is connected to the second closing element (4), continues floating through the discharge bore (3d) and is tightly connected on the end of the first closing element (3) facing away the second closing element (4) to the first closing element via at least one substantially radially oriented traverse (3e).

12. The double seat valve according to claim 10 or 11,
**characterized in that**
chamfer (3f) is made as the envelope of a cone.

13. The double seat valve according to claim 12,
**characterized In that**
the envelope of a cone (3f) relative to the base surface of the cone is inclined by an angle of inclination (ζ), preferably in the range 10 ≤ ζ ≤ 20 degrees, preferably ζ = 15 degrees.

14. The double seat valve according to one of claims 11 to 13,
**characterized in that**
there are three traverses (3e) which are arranged distributed uniformly over the circumference tightly on the shifting rod section (3a*), and which are connected each radially outside tightly to the circumferential ring (3g) and that the shifting rod section (3a*), the crosspieces (3e) and the ring (3g) form an integral welding part (30).

15. The double seat valve according to claim 14,
**characterized in that**
the welding part (30) on the outside via the ring (3g) adjoins a pressure balance piston (3c) which borders the section of the discharge bore (3d) away from the leakage cavity, and on the inside adjoins the first shifting rod (3a) by way of the shifting rod section (3a*), and that the ring (3g) in its inside diameter is enlarged relative to the diameter of the discharge bore (3d) with the interposition of a conically widening transition region such that the inside passage of the discharge bore (3d) is not narrowed by the traverses (3e).

16. The double seat valve according to one of claims 1 to 15,
**characterized in that**
the second seat surface (2b) is made conical and that the second seal (7) seals axially/radially relative to the second seat surface (2b) in sliding/pressing engagement.

17. The double seat valve according to one of claims 1 to 15,
**characterized in that**
the second seat surface (2b) is perpendicular to the longitudinal axis of the double seat valve (1) and that the second seal (7) seals axially relative to the second seat surface (2b) in pressing engagement.

18. The double seat valve according to one of claims 1 to 17,
**characterized in that**
the end section (3*) provided on the first closing element (3) on the leakage cavity side is made in the form of a cylindrical lug which with the first seat surface (2a) forms a annular first throttle gap (D1).

## Revendications

1. Soupape à double siège apte au nettoyage du siège comportant deux organes de fermeture (3, 4) disposés en série, pouvant être déplacés l'un par rapport à l'autre, lesquels empêchent que les fluides ne débordent d'une partie de boîtier de soupape (1a; 1b) dans une autre partie de boîtier de soupape (1b; 1a) lorsque la soupape à double siège (1) est en position fermée, lesquels délimitent entre eux aussi bien dans la position fermée que dans la position ouverte un espace creux de fuite (5) qui est relié aux abords de la soupape à double siège (1), dans laquelle le premier organe de fermeture (3) réalisé comme un piston coulissant est logé de manière étanche dans la position fermée, dans un orifice de liaison (2c) reliant entre elles les parties de boîtier de soupape (1a, 1b) et vient en appui de manière étanche dans le cadre de son mouvement d'ouverture au niveau du deuxième organe de fermeture (4) associé à une deuxième surface de siège (4), présentant un deuxième joint d'étanchéité (7) et dans laquelle le deuxième organe de fermeture est transféré lors de l'autre mouvement d'ouverture également dans une position ouverte (H), dans laquelle le premier organe de fermeture (3) présente au niveau de sa section d'extrémité (3*) un premier joint d'étanchéité (6) qui assure l'étanchéité de manière radiale par rapport à une première surface de siège (2a) cylindrique réalisée dans l'orifice de liaison (2c), dans laquelle le deuxième organe de fermeture (4) comporte au niveau de son extrémité tournée vers le premier organe de fermeture (3) un évidement (4b) doté d'une paroi périphérique (4c) essentiellement cylindrique, alignée avec la première surface de siège (2a) cylindrique, et que l'évidement (4b) est dimensionné dans le but de loger de manière étanche lors du mouvement d'ouverture la section d'extrémité (3*) et le premier joint d'étanchéité (6) radial du premier organe de fermeture (3), avant que le deuxième organe de fermeture (4) ne s'ouvre, comportant des organes de fermeture (3, 4) qui indépendamment les uns des autres peuvent être amenés par une course partielle respectivement de manière espacée par des fentes dans une position de nettoyage de siège aux fins du nettoyage de leurs surfaces de siège coaxiales (2a, 2b), dans laquelle le deuxième organe de fermeture (4) parvient dans sa position de nettoyage de siège respective grâce à une deuxième course partielle (T2) orientée dans la même direction que le mouvement d'ouverture et le premier organe de fermeture (3) parvient sans sa position respective de nettoyage de siège grâce à une première course partielle (T1) opposée au mouvement d'ouverture, dans laquelle le deuxième organe de fermeture (4) repose dans sa position fermée par une surface de butée (4f), laquelle réalise avec la paroi périphérique (4c; 4h) une deuxième arrête circonférentielle (U2), sur le boîtier de soupape (10; 1a, 1b), à savoir de manière directement adjacente à la première surface de siège (2a), dans laquelle la paroi périphérique (4c) devient au niveau de son extrémité opposée au premier organe de fermeture (3) une surface de déviation (4d) symétrique en rotation, ladite surface de déviation (4d) débouchant dans une surface frontale (4e) de l'évidement (4b), orientée essentiellement de manière perpendiculaire par rapport à l'axe longitudinal du deuxième organe de fermeture (4), et dans laquelle la surface de déviation (4d) vue en section transversale présente un contour (K) doté d'un tracé sans courbe, et sachant qu'un vecteur directionnel dans le point de démarrage de la surface de déviation (4d) est dirigé dans un alésage de sortie (3d ; 3d*) central disposé dans le premier organe de fermeture (3) sans heurter le premier organe de fermeture (3) en formant une pression dynamique à proximité de ses zones bordant l'espace creux de fuite (5),
**caractérisée en ce**
**que** la surface de butée (4f) est disposée sur une surface de délimitation du deuxième organe de fermeture (4), contigüe radialement côté intérieur au deuxième joint d'étanchéité (7) et repose sur la deuxième surface de siège (2b) lorsque le deuxième organe de fermeture (4) est en position fermée, en ce que le deuxième organe de fermeture (4) présente par rapport à son deuxième joint d'étanchéité (7) de manière radiale côté extérieur, un contour périphérique (4*) cylindrique, et en ce que le contour périphérique (4*) forme avec un évidement (2d) cylindrique annulaire, dans l'orifice de liaison (2c), sur le côté du deuxième organe de fermeture (4), une deuxième fente d'étranglement (D2) annulaire.

2. Soupape à double siège selon la revendication 1,
**caractérisée en ce**
**qu'**une délimitation côté frontal, tournée vers l'espace creux de fuite (5), du premier organe de fermeture (3) comporte dans la première surface de siège (2a), une distance de sécurité axiale (x) par rapport au vecteur directionnel au niveau d'un point de sortie de la deuxième surface de siège (2b), réalisé comme une première arête circonférentielle (U1)

3. Soupape à double siège selon la revendication 2,
**caractérisée en ce**
**que** la distance de sécurité (x) est au moins aussi grande que la somme de toutes les tolérances de fabrication des composants de la soupape à double siège (1), lesquelles déterminent, lorsque le premier organe de fermeture (3) est en position fermée, la distance axiale minimale de ce dernier par rapport à la deuxième surface de siège (2b).

4. Soupape à double siège selon l'une quelconque des revendications 1 à 3,
**caractérisée en ce**
**que** la première arête circonférentielle (U1) formée par la deuxième surface de siège (2b) et la première surface de siège (2a) est arrondie avec un deuxième arrondi en coin (r3) aussi petit que possible.

5. Soupape à double siège selon l'une quelconque des revendications 1 à 4,
**caractérisée en ce**
**que** la paroi périphérique (4c) cylindrique débouche dans un deuxième chanfrein d'entrée (4h) servant à obtenir une transition lisse du premier joint d'étanchéité radial (6), et en ce que le deuxième chanfrein d'entrée (4h) réalise la deuxième arête circonférentielle (U2) avec la surface de butée (4f).

6. Soupape à double siège selon l'une quelconque des revendications 1 à 5,
**caractérisée en ce**
**que** la deuxième arête circonférentielle (U2) est arrondie avec un premier arrondi en coin (r1) aussi petit que possible.

7. Soupape à double siège selon l'une quelconque des revendications 1 à 6,
**caractérisée en ce**
**que** la surface de déviation (4d) contre-dépouille la surface frontale (4e) d'une distance de contre-dépouille (y) axiale.

8. Soupape à double siège selon l'une quelconque des revendications 1 à 7,
**caractérisée en ce**
- **que** le contour (K) est constitué d'une suite de sections courbées (K1, K2, K3, ..., Kn), lesquelles ont respectivement au niveau de leurs points de transition respectifs une tangente commune,
- ou que le contour (K) est constitué d'une seule section de courbures modifiées en continu,
- ou que le contour (K) est constitué d'une seule section présentant une courbure constante.

9. Soupape à double siège selon l'une quelconque des revendications 1 à 8,
**caractérisée en ce**
**que** le vecteur directionnel de la dernière section (Kn) présente par rapport à la surface frontale (4e) un deuxième angle de déviation (ß), de préférence se situant dans la plage où 5 ≤ ß ≤ 20 degrés, de préférence où ß = 15 degrés.

10. Soupape à double siège selon l'une quelconque des revendications 1 à 9,
**caractérisée en ce**
**que** l'alésage de sortie (3d) relie l'espace creux de fuite (5) aux abords de la soupape à double siège (1) par l'intermédiaire de plusieurs alésages de liaison (3d*) répartis sur la périphérie, et en ce que la délimitation côté frontal, tournée vers l'espace creux de fuite (5), du premier organe de fermeture (3) présente une partie inclinée (3f) descendant de tous les côtés sur toute la surface vers l'alésage de sortie (3d).

11. Soupape à double siège selon l'une quelconque des revendications 1 à 9,
**caractérisée en ce**
**que** l'alésage de sortie (3d) relie l'espace creux de fuite (5) aux abords de la soupape à double siège (1), en ce que la délimitation côté frontal, tournée vers l'espace creux de fuite (5), du premier organe de fermeture (3) présente une partie inclinée (3f) descendant de tous les côtés sur toute la surface vers l'alésage de sortie (3d), et en ce qu'une première tige de réglage (3a) reliée au premier organe de fermeture (3) traverse de manière concentrique une deuxième tige de réglage (4a) reliée au deuxième organe de fermeture (4) et configurée comme une tige creuse, se poursuit de manière flottante à travers l'alésage de sortie (3d) et est reliée au niveau d'une extrémité du premier organe de fermeture (3), faisant face au deuxième organe de fermeture (4), au premier organe de fermeture par l'intermédiaire au moins d'une traverse (3e) orientée essentiellement radialement.

12. Soupape à double siège selon la revendication 10 ou 11,
**caractérisée en ce**
**que** la partie inclinée (3f) est configurée comme une surface d'enveloppe conique.

13. Soupape à double siège selon la revendication 12,
**caractérisée en ce**
**que** la surface d'enveloppe conique (3f) est inclinée par rapport à la surface de base du cône d'un angle d'inclinaison (ζ) se situant de préférence dans la plage où 10 ≤ ζ ≤ 20 degrés, de préférence où ζ = 15 degrés.

14. Soupape à double siège selon l'une quelconque des revendications 11 à 13,
**caractérisée en ce**
**que** trois traverses (3e) réparties de manière homogène sur la périphérie, sont prévues de manière fixe au niveau d'une section de tige de réglage (3a*), lesquelles sont reliées respectivement de manière radiale côté extérieur de manière fixe à un anneau circonférentiel (3g), et en ce que la section de tige de réglage (3a*), les traverses (3e) et l'anneau (3g) forment une pièce soudée (30) d'un seul tenant.

15. Soupape à double siège selon la revendication 14,
**caractérisée en ce**
**que** la pièce soudée (30) se raccorde côté extérieur par l'intermédiaire de l'anneau (3g) à un piston de compensation de pression (3c) délimitant une section de l'alésage de sortie (3d) éloignée de l'espace creux de fuite et côté intérieur par l'intermédiaire de la section de tige de réglage (3a*) à la première tige de réglage (3 a), et en ce que l'anneau (3g) est agrandi dans son diamètre intérieur par rapport au diamètre de l'alésage de sortie (3d) en intercalant une zone de transition s'élargissant de manière conique de telle manière que le passage intérieur de l'alésage de sortie (3d) n'est pas réduit par les traverses (3e).

16. Soupape à double siège selon l'une quelconque des revendications 1 à 15,
**caractérisée en ce**
**que** la deuxième surface de siège (2b) est configurée de manière à présenter une forme de cône, et en ce que le deuxième joint d'étanchéité (7) assure l'étanchéité de manière axiale/radiale par rapport à la deuxième surface de siège (2b) en prise par glissement/par pression.

17. Soupape à double siège selon l'une quelconque des revendications 1 à 15,
**caractérisée en ce**
**que** la deuxième surface de siège (2b) est disposée de manière perpendiculaire par rapport à l'axe longitudinal de la soupape à double siège (1), et en ce que le deuxième joint d'étanchéité (7) assure l'étanchéité de manière axiale par rapport à la deuxième surface de siège (2b) en prise par pression.

18. Soupape à double siège selon l'une quelconque des revendications 1 à 17,
**caractérisée en ce**
**que** la section d'extrémité (3*) prévue sur le premier organe de fermeture (3) côté espace de fuite est réalisée sous la forme d'une saillie cylindrique, qui forme avec la première surface de siège (2a) une première fente d'étranglement (D1) annulaire.
